# FASCICULE DE BREVET EUROPEEN

(11) **EP 0 882 986 B1**
(45) Date de publication et mention de la délivrance du brevet: **23.07.2003**
(21) Numéro de dépôt: 98401271.6
(22) Date de dépôt: 28.05.1998
(51) Int. Cl.: G01P 3/44, G01D 11/02

(54) **Dispositif de détection de paramètres de rotation d'une colonne de direction**
Vorrichtung zur Bestimmung der Parameter der Rotation einer Lenkwelle
Device for detecting rotation parameters of a steering column

(30) Priorité: 03.06.1997 FR 9706809
(43) Date de publication de la demande: 09.12.1998
(73) Titulaire: SKF FRANCE, F-92142 Clamart Cédex (FR)
(72) Inventeur: Message, Olivier, 37000 Tours (FR); Landrieve, Franck, 37230 Fondettes (FR); Thoumieux, Jean-Luc, 37540 Saint Cyr sur Loire (FR); Lhote, Pascal, 37230 Fondettes (FR)
(74) Mandataire: Casalonga, Axel

(56) Documents cités:
- EP-A- 0 424 185
- EP-A- 0 443 940
- US-A- 5 158 374

## Description

La présente invention concerne le domaine de la détection de paramètres de rotation d'une colonne de direction, par exemple de véhicule automobile. Les paramètres de rotation que l'on cherche à connaître sont, en général, la position angulaire, la vitesse de rotation et le sens de rotation.

On connaît dans l'art antérieur des roulements instrumentés qui sont destinés à être montés sur un arbre et qui nécessitent un démontage de la colonne de direction lorsqu'un élément défaillant d'un tel roulement doit être changé.

On connaît par le document EP-A-0 443 940, un appareil de détection de la vitesse et de la direction d'un arbre de colonne de direction. L'arbre de colonne de direction est pourvu d'un palier à roulement comprenant une bague intérieure allongée et une bague extérieure également allongée avec des éléments roulants disposés entre les deux bagues. La bague intérieure est solidaire de l'arbre et la bague extérieure est solidaire du carter de colonne de direction. Un codeur est monté sur la bague intérieure. Un capteur est solidaire d'un bloc capteur amovible et supporté par la bague extérieure fixe.

Ce type d'appareil présente certains inconvénients. Le bloc capteur amovible est clipsé sur la bague extérieure du roulement de l'un des paliers de colonne de direction, ce qui implique que cette bague ait une forme spécialement adaptée pour recevoir ledit bloc. L'anneau codeur est fixé sur la bague tournante du même roulement, ce qui requiert une forme de bague et des dimensions adaptées pour recevoir ledit codeur. Il résulte de ces deux exigences que l'on utilise des roulements de type non standard, ce qui induit un coût supplémentaire.

Seul le capteur étant amovible, le remplacement d'un ensemble de détection défaillant (capteur et codeur) implique donc une intervention sur le mécanisme de colonne de direction pour le démontage du roulement muni du codeur.

Le bloc capteur étant monté sur le roulement de colonne de direction, les variations des efforts exercés sur lesdits roulements peuvent provoquer des variations de la valeur de l'entrefer radial entre le capteur et le codeur, ce qui nuit à la précision de la détection. En cas de défaillance du roulement de colonne de direction, et de changement de celui-ci, le codeur n'est pas récupérable. La protection du capteur et du codeur vis-à-vis de pollutions extérieures n'est pas entièrement satisfaisante. L'appareil de détection n'est adaptable qu'en extrémité de colonne de direction dans la mesure où il est fixé sur l'un des roulements formant palier de colonne de direction.

D'autres dispositifs de l'art antérieur proposent des systèmes de détection dans lesquels le codeur est fixé sur l'arbre tournant de la colonne de direction et où le capteur est solidarisé avec le carter de colonne.

Dans ce cas, l'entrefer entre capteur et codeur est généralement préréglé en usine lors du montage.

Outre les problèmes déjà évoqués plus haut, il est difficile de garantir un entrefer précis donnant un bon signal lors de l'échange d'un ensemble capteur/codeur défaillant.

L'invention a pour objet de résoudre l'ensemble de ces problèmes en proposant un dispositif de détection amovible indépendant des roulements de colonne de direction, ledit dispositif amovible regroupant le moyen capteur et le moyen codeur.

Le dispositif de détection, selon l'invention, est destiné à la mesure de paramètres de rotation d'un arbre tournant par rapport à un élément fixe, au moins un palier étant prévu entre l'arbre et l'élément fixe pour le montage à rotation de l'arbre par rapport à l'élément fixe. Le dispositif de détection comprend un moyen codeur entraîné en rotation par l'arbre tournant, et un moyen capteur solidaire d'un élément fixe et disposé en regard et avec un faible entrefer par rapport au moyen codeur dont le défilement lors de la rotation est détecté par le moyen capteur. Le moyen codeur et le moyen capteur sont supportés par un ensemble amovible indépendant du palier, ledit ensemble étant apte à être monté sur l'élément fixe et étant pourvu d'une partie fixe supportant le moyen capteur et d'une partie tournante supportant le moyen codeur, la rotation de la partie tournante étant liée à celle de l'arbre tournant. Ainsi, le dispositif de détection n'est pas affecté par une intervention mécanique sur la colonne de direction et inversement, un changement éventuel du dispositif de détection n'implique pas d'intervention sur la partie mécanique de la colonne de direction. Le dispositif de détection n'est pas lié mécaniquement à un roulement. La partie tournante peut être disposée radialement d'un côté de l'arbre.

Dans un mode de réalisation de l'invention, l'ensemble amovible comprend au moins un roulement disposé entre la partie fixe et la partie tournante.

Avantageusement, l'ensemble amovible est radialement adjacent à l'arbre tournant et est fixé dans une ouverture prévue dans un carter tubulaire de l'élément fixe, ledit ensemble amovible comprenant un couvercle obturant ladite ouverture. Le moyen capteur et le moyen codeur sont ainsi parfaitement protégés.

Dans un mode de réalisation de l'invention, l'ensemble amovible comprend une semelle élastique disposée entre le couvercle et la partie fixe.

Dans un autre mode de réalisation, la partie fixe comprend un manchon élastique.

Dans un autre mode de réalisation de l'invention, la partie fixe et le couvercle sont réalisés de façon monobloc en étant reliés par une portion élastique qui peut avoir la forme de méandres. Dans ces trois cas, la semelle, le manchon ou la portion élastique ont pour but d'absorber toute précontrainte radiale excessive qui pourrait naître directement ou indirectement entre la partie tournante supportant le moyen codeur et l'arbre tournant.

Une telle précontrainte radiale pourrait être due, par exemple, à des défauts de positionnement relatifs entre l'arbre tournant et la partie tournante supportant le moyen codeur ou bien à des déformations radiales de l'arbre tournant.

Ce dispositif élastique permet en outre de réduire ou d'éliminer les jeux de dentures.

Avantageusement, l'ensemble amovible comprend un moyen de prise du mouvement de l'arbre tournant.

Dans un mode de réalisation de l'invention, le moyen de prise du mouvement de l'arbre tournant comprend un pignon solidaire de l'arbre tournant et une couronne de dents disposée sur une surface extérieure de la partie tournante de l'ensemble amovible et capable de coopérer avec le pignon. Le pignon peut être directement formé sur l'arbre tournant.

Dans ces modes de réalisation, la semelle, le manchon ou la portion élastique permettent, en évitant les risques de précontrainte excessive, de faire engrener les dentures sans jeu ou avec un jeu très réduit et par conséquent d'obtenir un signal parfaitement représentatif de la rotation de l'arbre tournant.

Dans un autre mode de réalisation de l'invention, le moyen de prise du mouvement de l'arbre tournant comprend un galet réalisé en matériau élastique disposé sur une surface extérieure de la partie tournante de l'ensemble amovible et capable de coopérer par friction avec l'arbre tournant.

On peut prévoir d'entraîner le moyen codeur avec un rapport de démultiplication différent de un, ce qui peut présenter un grand intérêt pour la compatibilité avec le système de traitement et l'exploitation du signal fourni par le moyen capteur. C'est ainsi qu'un rapport de démultiplication supérieur à un permet d'utiliser un codeur magnétique comportant un nombre de pôles inférieur à celui qui serait nécessaire si ledit codeur était monté directement sur l'arbre de colonne de direction.

Dans un mode de réalisation de l'invention, la partie tournante est de forme sensiblement tubulaire, le moyen de prise du mouvement étant disposé sensiblement dans le même plan radial que le palier à roulement.

Le moyen codeur peut être disposé sur une surface extérieure ou sur un alésage de la partie tournante.

Grâce à l'invention, on dispose d'un ensemble complet et compact de détection amovible incluant le capteur et le codeur. L'ensemble amovible n'est pas affecté par les efforts exercés sur les paliers de colonne de direction. Le roulement utilisé pour le montage à rotation du codeur par rapport au capteur ne subit aucun effort notable susceptible de provoquer une variation de la valeur d'entrefer radiale entre le capteur et le codeur. Le signal obtenu en fonctionnement est donc parfaitement stable et fiable.

Le caractère amovible de l'ensemble de détection rend particulièrement aisée l'opération de démontage et de montage dudit ensemble sur le carter de colonne de direction.

Cette opération peut se faire sans intervention sur la partie mécanique de la colonne de direction et est sans effet sur la valeur de l'entrefer entre capteur et codeur.

La fonctionnalité de l'ensemble de détection est donc complètement garantie après montage (ou remontage) dudit ensemble sur la colonne de direction.

Le dispositif de détection étant indépendant des roulements de colonne de direction, il peut être inséré à tout endroit de ladite colonne.

En outre, une intervention mécanique sur la colonne de direction n'entraînera en aucun cas l'endommagement ou la destruction du codeur.

Enfin, l'invention permet d'utiliser des roulements conventionnels pour les paliers de colonne de direction réduisant ainsi les coûts de fabrication.

L'invention sera mieux comprise à l'étude de la description détaillée de quelques modes de réalisation pris à titre d'exemples nullement limitatifs et illustrés par les dessins annexés, sur lesquels :
la figure 1 est une vue en coupe transversale d'une colonne de direction équipée d'un dispositif de détection selon un premier mode de réalisation de l'invention;
la figure 2 est une vue similaire à la figure 1 d'un second mode de réalisation de l'invention;
la figure 3 est une vue similaire à la figure 1 d'un troisième mode de réalisation de l'invention;
la figure 4 est une vue en perspective de la portion élastique reliant la partie fixe et le couvercle;
la figure 5 est une vue similaire à la figure 1 d'un quatrième mode de réalisation de l'invention; et
la figure 6 est une vue similaire à la figure 1 d'un cinquième mode de réalisation de l'invention.

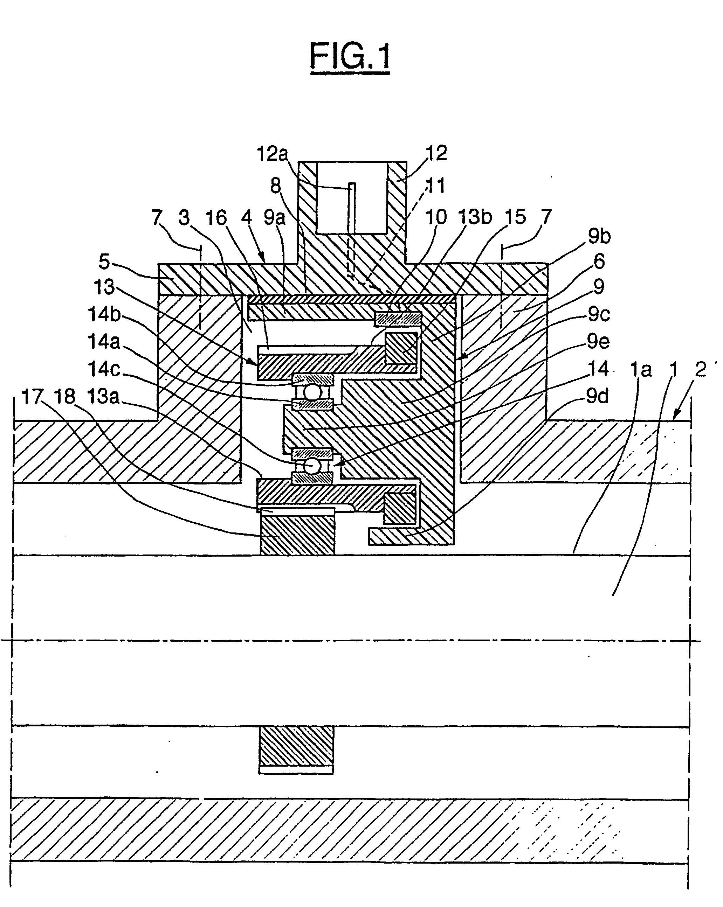

Comme on peut le voir sur la figure 1, la colonne de direction comprend un arbre tournant 1 disposé dans un carter tubulaire 2. L'arbre tournant 1 est libre en rotation par rapport au carter tubulaire 2 au moyen de paliers à roulement disposés à ses extrémités, non représentées. Le carter tubulaire 2 comprend un logement 3 formé radialement par rapport audit carter tubulaire 2 et situé axialement en-dehors de la zone de fixation des paliers à roulement précités. Dans le logement 3, est disposé un ensemble amovible 4 qui se trouve ainsi sur le côté de l'arbre 1.

L'ensemble amovible 4 comprend un couvercle 5 fermant le logement 3 et fixé aux parois 6 du logement 3, issues du carter tubulaire 2, au moyen de vis 7. L'ensemble amovible 4 comprend également une partie fixe 9 réalisée en matériau synthétique et solidarisée au couvercle 5 avec interposition d'une semelle élastique 8 entre ledit couvercle 5 et ladite partie fixe 9.

La partie fixe 9 est pourvue d'une portion de fixation 9a en contact avec la semelle élastique 8, d'une portion radiale 9b s'étendant à partir de la portion de fixation 9a en direction de l'arbre tournant 1, d'une portion axiale 9c s'étendant parallèlement à l'arbre tournant 1 et d'un rebord cylindrique 9d à proximité de l'arbre tournant 1. La portion de fixation 9a supporte le capteur 10. A titre de variante, on pourrait prévoir une pluralité de capteurs, ce qui permet d'obtenir une information relative au sens de rotation d'un codeur par rapport aux capteurs. Le capteur 10 est relié par l'intermédiaire d'un fil électrique 11 à un connecteur 12 muni de broches 12a permettant de le relier à un dispositif électronique capable d'exploiter les informations fournies par le capteur 10.

La portion axiale 9c entièrement disposée à l'intérieur du logement 3, comprend une portion de diamètre réduit 9e disposée à son extrémité libre et supportant une partie tournante 13 de forme sensiblement cylindrique par l'intermédiaire d'un roulement 14 pourvu d'une bague intérieure fixe 14a solidaire de la portion 9e, d'une bague extérieure tournante 14b solidaire de la partie tournante 13 et d'une rangée d'éléments roulants 14c, par exemple des billes, disposés entre les bagues fixe 14a et tournante 14b.

La partie tournante 13 est disposée autour de la portion axiale 9c de la partie fixe 9 et est pourvue d'un alésage 13a recevant le palier à roulement 14 et d'une surface extérieure 13b sur laquelle est disposé un codeur 15, par exemple un anneau aimanté multipolaire réalisé en plastoferrite, le capteur 10 pouvant être, par exemple, une sonde à effet Hall. En variante, on peut prévoir un capteur optique coopérant avec un codeur adapté.

Le codeur 15 est disposé radialement en regard du capteur 10 avec un faible entrefer radial. Le codeur 15 est disposé à une extrémité axiale de la partie tournante 13, à proximité de la portion radiale 9b de la partie fixe 9, et est entouré par la portion de fixation 9a et le rebord 9d. L'autre extrémité axiale de la partie tournante 13 reçoit une couronne de dents 16 formée directement dans la matière formant la partie tournante 13. Cette couronne de dents 16 est disposée sensiblement dans le même plan radial que le roulement 14 et est prévue pour coopérer par engrènement avec un pignon 17 fixé sur la surface extérieure la de l'arbre tournant 1. Le pignon 17 est également pourvu d'une couronne de dents 18 de dimensions et de forme adaptées à la couronne de dents 16.

Ainsi, la rotation de l'arbre tournant 1 et celle du pignon 17 entraînent une rotation correspondante de la partie tournante 13 dont la rotation est détectée par le capteur 10 en raison de la présence du codeur 15.

La semelle élastique limite l'apparition de contraintes excessives entre la couronne de dents 16 et le pignon 17 qui seraient dues, par exemple, à des défauts d'alignement entre l'arbre tournant 1 et la partie tournante 13 ou bien à des déformations radiales de l'arbre 1.

La semelle élastique permet également de faire engrener sans risque les dentures avec un jeu nul ou très réduit, et par conséquent d'obtenir un signal parfaitement représentatif de la rotation de l'arbre tournant 1. On peut prévoir que la couronne de dents 16 de la partie tournante 13 possède un nombre de dents inférieur à celui du pignon 17. Une rotation de l'arbre tournant 1 d'un angle donné entraîne alors une rotation de la partie tournante 13 d'un angle plus élevé, ce qui se traduit par une augmentation de la sensibilité de détection de rotation par le capteur 10. Cette disposition permet également de prévoir une partie tournante 13 de diamètre plus faible que le pignon 17, ce qui permet une réduction de l'espace occupé par l'ensemble amovible 4.

Le logement 3 prévu pour l'ensemble amovible 4, peut être disposé le long de la colonne de direction en fonction de l'encombrement d'autres éléments du véhicule. Les paliers à roulement de colonne de direction disposés aux extrémités de celle-ci peuvent être démontés et changés sans aucune incidence sur le dispositif de détection. Enfin, celui-ci est bien protégé des pollutions extérieures en étant enfermé dans le logement 3 obturé par le couvercle 5.

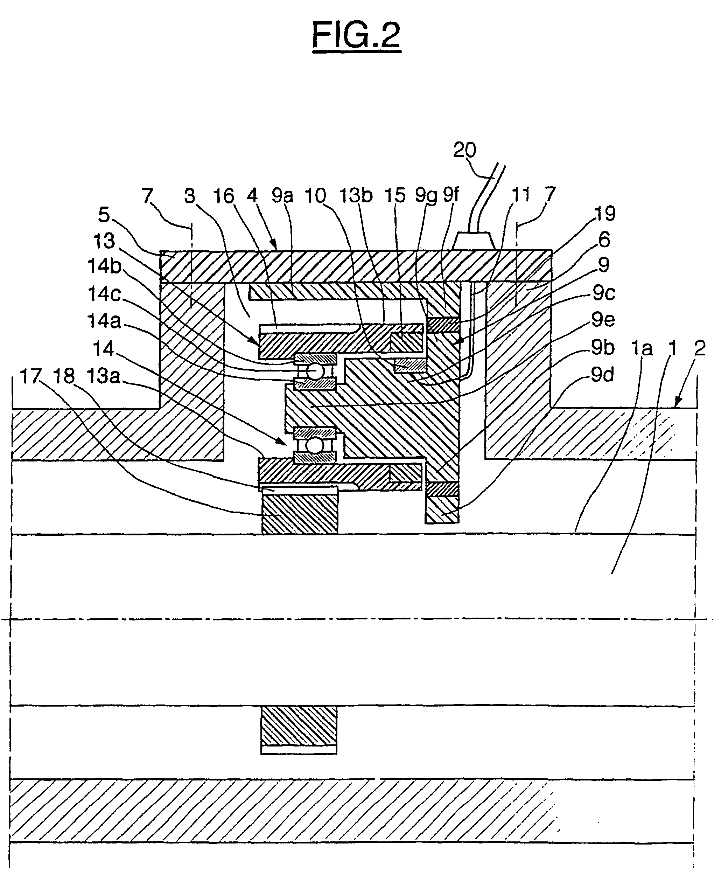

Le mode de réalisation illustré sur la figure 2 est similaire à celui de la figure 1, à ceci près que le coussin est remplacé par un manchon élastique cylindrique 19 prévu entre la portion de fixation 9a directement montée sur le couvercle 5 et la portion axiale 9c, la portion radiale 9b étant séparée en deux parties 9f et 9g par le manchon élastique 19. Le capteur 10 est ici disposé sur la surface cylindrique extérieure de la portion axiale 9c et le codeur 15 est disposé sur l'alésage 13a de la partie tournante 13. L'ensemble amovible 4 est dépourvu de connecteur, mais est relié directement à un câble électrique 20. Le manchon élastique 19 a la même fonction que la semelle élastique 8, à savoir l'absorption d'éventuels efforts radiaux qui pourraient survenir entre la couronne de dents 16 et le pignon 17.

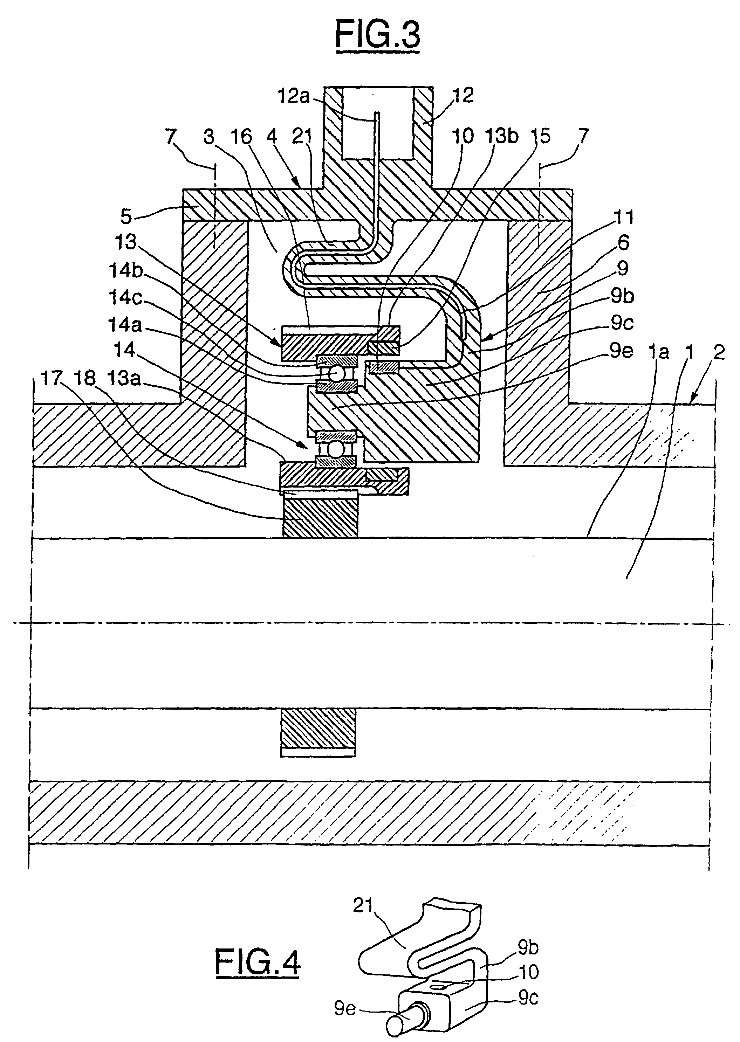

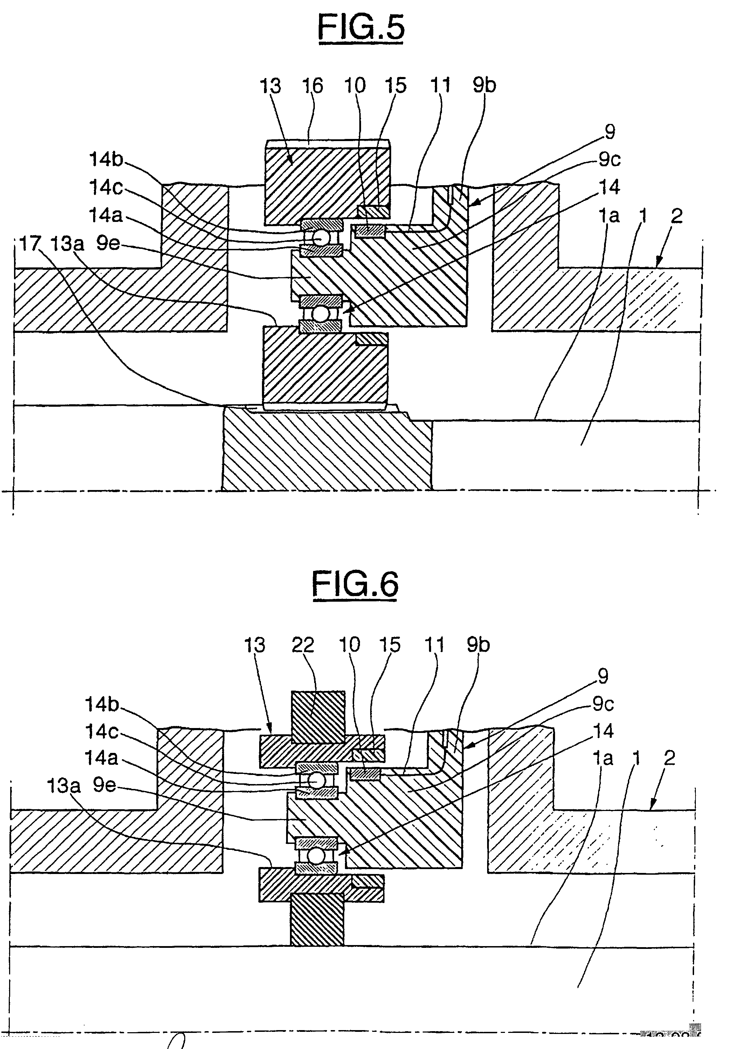

Le mode de réalisation illustré sur les figures 3 et 4 est similaire à celui de la figure 1, à ceci près que la semelle élastique est remplacée par une portion élastique 21 en forme de méandre. Le couvercle 5, le connecteur 12, la portion élastique 21 et la partie fixe 9 forment une pièce monobloc obtenue par moulage, ce qui permet une réduction du nombre total de pièces. La partie fixe 9 est réduite à une portion radiale 9b de faibles dimensions, reliée à la portion élastique 21, et à la portion axiale 9c. Le capteur 10 et le codeur 15 sont disposés comme sur la figure 2.

Avantageusement, les broches 12a du connecteur se prolongent en épousant la forme des méandres de la portion élastique 21 dans laquelle elles sont noyées au moment du moulage de la pièce monobloc, la prolongation desdites broches constituant ainsi une partie de l'élément conducteur reliant le connecteur 12 au capteur 15.

Le rôle de la partie élastique est le même que celui de la semelle 8 ou du manchon 19.

Sur la figure 5, le pignon pourvu de la couronne de dents 17 solidaire de l'arbre tournant 1, est formé directement sur l'arbre tournant 1, ce qui permet de supprimer une pièce.

Dans le mode de réalisation illustré sur la figure 6, la surface extérieure cylindrique 13b de la partie tournante 13 reçoit un galet 22 réalisé en matériau élastique et venant en contact avec la surface cylindrique extérieure la de l'arbre tournant 1. L'arbre tournant 1 entraîne par friction le galet 22. On évite ainsi la présence de dents ou d'un pignon sur l'arbre tournant 1.

D'autres variantes du dispositif pourraient être envisagées sans sortir du cadre de l'invention.

C'est ainsi que l'on pourrait utiliser un ensemble couvercle/partie fixe ne comportant pas d'élément élastique reliant ces deux parties.

On pourrait également envisager d'utiliser deux roulements au lieu d'un pour donner plus de rigidité au système et améliorer encore, si nécessaire, la stabilité de la valeur d'entrefer entre le capteur et le codeur.

Grâce à l'invention, on obtient un ensemble complet de détection amovible qui inclut le capteur et le codeur et qui n'est pas affecté par les efforts exercés sur les paliers de colonne de direction, ce qui augmente la précision de la détection grâce à la réduction de la variation de la valeur de l'entrefer entre le capteur et le codeur. L'ensemble complet de détection peut être inséré à tout endroit de la colonne de direction, indépendamment des paliers à roulements disposés aux extrémités de celle-ci. Le remplacement d'un palier de colonne de direction s'effectue sans incidence sur l'ensemble de détection qui peut être conservé en l'état. Réciproquement, le remplacement de l'ensemble de détection s'effectue sans intervention et sans incidence sur le ou les paliers de colonne de direction.

## Revendications

1. Dispositif de détection de paramètres de rotation d'un arbre tournant (1) par rapport à un élément fixe, au moins un palier étant prévu entre l'arbre et l'élément fixe pour le montage à rotation de l'arbre par rapport à l'élément fixe, ledit dispositif comprenant un moyen codeur (15) entrainé en rotation par l'arbre tournant, et un moyen capteur (10) solidaire d'un élément fixe et disposé en regard et avec un faible entrefer par rapport au moyen codeur dont le défilement lors de la rotation est détecté par le moyen capteur,
**caractérisé par le fait que** le moyen codeur et le moyen capteur sont supportés par un ensemble amovible (4) indépendant du palier, ledit ensemble étant apte à être monté sur l'élément fixe et étant pourvu d'une partie fixe (9) supportant le moyen capteur et d'une partie tournante (13) supportant le moyen codeur, la rotation de la partie tournante étant liée à celle de l'arbre tournant.

2. Dispositif selon la revendication 1, **caractérisé par le fait que** la partie tournante est disposée radialement d'un côté de l'arbre.

3. Dispositif selon la revendication 1 ou 2, **caractérisé par le fait que** l'ensemble amovible comprend au moins un roulement (14) disposé entre la partie fixe et la partie tournante.

4. Dispositif selon l'une des revendications précédentes, **caractérisé par le fait que** l'ensemble amovible est radialement adjacent à l'arbre tournant et est fixé dans une ouverture (3) prévue dans un carter tubulaire (2) de l'élément fixe, ledit ensemble amovible comprenant un couvercle (5) obturant ladite ouverture.

5. Dispositif selon la revendication 4, **caractérisé par le fait que** l'ensemble amovible comprend une semelle élastique (8) disposée entre le couvercle et la partie fixe.

6. Dispositif selon la revendication 4, **caractérisé par le fait que** la partie fixe comprend un manchon élastique (19).

7. Dispositif selon la revendication 4, **caractérisé par le fait que** la partie fixe et le couvercle sont réalisés de façon monobloc.

8. Dispositif selon la revendication 7, **caractérisé par le fait que** la partie fixe et le couvercle sont reliés par une portion élastique (21).

9. Dispositif selon la revendication 8, **caractérisé par le fait que** la portion élastique a la forme de méandres.

10. Dispositif selon l'une quelconque des revendications précédentes, **caractérisé par le fait que** l'ensemble amovible comprend un moyen de prise du mouvement de l'arbre tournant.

11. Dispositif selon la revendication 10, **caractérisé par le fait que** le moyen de prise du mouvement de l'arbre tournant comprend un pignon (17) solidaire de l'arbre tournant et une couronne de dents (16) disposée sur une surface extérieure de la partie tournante de l'ensemble amovible et capable de coopérer avec le pignon.

12. Dispositif selon la revendication 11, **caractérisé par le fait que** le pignon est directement formé sur l'arbre tournant.

13. Dispositif selon la revendication 10, **caractérisé par le fait que** le moyen de prise du mouvement de l'arbre tournant comprend un galet (22) réalisé en matériau élastique disposé sur une surface extérieure de la partie tournante de l'ensemble amovible et capable de coopérer par friction avec l'arbre tournant.

14. Dispositif selon l'une quelconque des revendications 10 à 13, **caractérisé par le fait que** la partie tournante est de forme sensiblement tubulaire, le moyen de prise du mouvement étant disposé sensiblement dans le même plan radial que le palier à roulement.

## Patentansprüche

1. Vorrichtung zur Erfassung von Parametern der Rotation einer umlaufenden Welle (1) in Bezug auf ein stillstehendes Element, wobei für die Drehanordnung der Welle in Bezug auf das stillstehende Element wenigstens ein Lager zwischen der Welle und dem stillstehenden Element vorgesehen ist, wobei die Vorrichtung ein Signalgebermittel (15), das durch die umlaufende Welle in Drehbewegung versetzt wird, und ein Signalaufnehmermittel (10) aufweist, das mit dem stillstehenden Element fest verbunden und in Bezug auf das Signalgebermittel diesem gegenüber und mit einem geringen Abstand zu diesem angeordnet ist, wobei das Vorbeilaufen des Signalgebermittels während der Drehbewegung durch das Signalaufnehmermittel erfasst wird,
**dadurch gekennzeichnet, dass** das Signalgebermittel und das Signalaufnehmermittel durch eine von dem Lager unabhängige unbewegliche Anordnung (4) getragen sind, wobei diese Anordnung in der Lage ist, an dem sillstehenden Element befestigt zu werden, und mit einem stillstehenden Teil (9), das das Signalaufnehmermittel trägt, sowie mit einem umlaufenden Teil (13) versehen ist, das das Signalgebermittel trägt, wobei die Drehbewegung des umlaufenden Teils mit derjenigen der umlaufenden Welle im Zusammenhang steht.

2. Vorrichtung nach Anspruch 1, **dadurch gekennzeichnet, dass** das umlaufende Teil in radialer Richtung auf einer Seite der Welle angeordnet ist.

3. Vorrichtung nach Anspruch 1 oder 2, **dadurch gekennzeichnet, dass** die unbewegliche Anordnung wenigstens ein Wälzlager (14) aufweist, das zwischen dem stillstehenden Teil und dem umlaufenden Teil angeordnet ist.

4. Vorrichtung nach einem der vorhergehenden Ansprüche, **dadurch gekennzeichnet, dass** die unbewegliche Anordnung sich in radialer Richtung in der Nähe der umlaufenden Welle befindet und in einer Öffnung (3) befestigt ist, die in einem ringförmigen Gehäuse (2) des stillstehenden Elementes vorgesehen ist, wobei die unbewegliche Anordnung einen Deckel (5) aufweist, der die Öffnung verschließt.

5. Vorrichtung nach Anspruch 4, **dadurch gekennzeichnet, dass** die unbewegliche Anordnung ein elastisches Sohlenelement (8) aufweist, das zwischen dem Deckel und dem stillstehenden Teil angeordnet ist.

6. Vorrichtung nach Anspruch 4, **dadurch gekennzeichnet, dass** das stillstehende Teil eine elastische Hülse (19) enthält.

7. Vorrichtung nach Anspruch 4, **dadurch gekennzeichnet, dass** das stillstehende Teil und der Deckel einstückig miteinander gefertigt sind.

8. Vorrichtung nach Anspruch 7, **dadurch gekennzeichnet, dass** das stillstehende Teil und der Deckel über einen elastischen Abschnitt (21) miteinander verbunden sind.

9. Vorrichtung nach Anspruch 8, **dadurch gekennzeichnet, dass** der elastische Abschnitt eine mäanderförmige Gestalt aufweist.

10. Vorrichtung nach einem der vorhergehenden Ansprüche, **dadurch gekennzeichnet, dass** die unbewegliche Anordnung ein Abtriebsmittel für die umlaufende Welle aufweist.

11. Vorrichtung nach Anspruch 10, **dadurch gekennzeichnet, dass** zu dem Abtriebsmittel für die umlaufende Welle ein Zahnrad (17), das mit der umlaufenden Welle fest verbunden ist, und ein Zahnkranz (16) gehören, der auf der Außenumfangsfläche des umlaufenden Teils der unbeweglichen Anordnung angeordnet und in der Lage ist, mit dem Zahnrad zusammenzuwirken.

12. Vorrichtung nach Anspruch 11, **dadurch gekennzeichnet, dass** das Zahnrad unmittelbar auf der umlaufenden Welle ausgebildet ist.

13. Vorrichtung nach Anspruch 10, **dadurch gekennzeichnet, dass** das Abtriebsmittel für die umlaufende Welle eine Reibwalze (22) aufweist, die aus einem elastischen Werkstoff gefertigt ist, der auf einer Außenumfangsfläche des umlaufenden Teils der unbeweglichen Anordnung angeordnet und in der Lage ist, durch Reibung mit der umlaufenden Welle zusammenzuwirken.

14. Vorrichtung nach einem der Ansprüche 10 bis 13, **dadurch gekennzeichnet, dass** das umlaufende Teil eine im Wesentlichen ringförmige Gestalt aufweist, wobei das Abtriebsmittel im Wesentlichen in der gleichen radialen Ebene wie das Wälzlager angeordnet ist.

## Claims

1. Device for detecting parameters of the rotation of a shaft (1) that rotates with respect to a stationary element, there being at least one bearing between the shaft and the stationary element so that the shaft can be mounted to rotate with respect to the stationary element, the said device comprising an encoder means (15) rotated by the rotating shaft, and a sensor means (10) secured to a stationary element and arranged facing and a small air gap away from the encoder means whose passage during rotation is detected by the sensor means,
**characterized in that** the encoder means and the sensor means are supported by a removable unit (4) independent of the bearing, the said unit being capable of being mounted on the stationary element and having a' stationary part (9) supporting the sensor means and a rotating part (13) supporting the encoder means, the rotation of the rotating part being connected to that of the rotating shaft.

2. Device according to Claim 1, **characterized in that** the rotating part is arranged radially on one side of the shaft.

3. Device according to Claim 1 or 2, **characterized in that** the removable unit comprises at least one rolling bearing (14) arranged between the stationary part and the rotating part.

4. Device according to one of the preceding claims, **characterized in that** the removable unit is radially adjacent to the rotating shaft and is fixed into an opening (3) made in a tubular casing (2) of the stationary element, the said removable unit comprising a cover (5) closing the said opening.

5. Device according to Claim 4, **characterized in that** the removable unit comprises an elastic pad (8) arranged between the cover and the stationary part.

6. Device according to Claim 4, **characterized in that** the stationary part comprises an elastic sleeve (19).

7. Device according to Claim 4, **characterized in that** the stationary part and the cover are produced as one piece.

8. Device according to Claim 7, **characterized in that** the stationary part and the cover are connected by an elastic portion (21).

9. Device according to Claim 8, **characterized in that** the elastic portion has a meandering shape.

10. Device according to any one of the preceding claims, **characterized in that** the removable unit comprises a means of taking movement off the rotating shaft.

11. Device according to Claim 10, **characterized in that** the means of taking movement off the rotating shaft comprises a pinion (17) secured to the rotating shaft, and a crown of teeth (16) arranged on an exterior surface of the rotating part of the removable unit and capable of interacting with the pinion.

12. Device according to Claim 11, **characterized in that** the pinion is formed directly on the rotating shaft.

13. Device according to Claim 10, **characterized in that** the means of taking movement off the rotating shaft comprises a roller (22) made of an elastic material arranged on an exterior surface of the rotating part of the removable unit and capable of interacting by friction with the rotating shaft.

14. Device according to any one of Claims 10 to 13, **characterized in that** the rotating part is of approximately tubular shape, the movement take-off means being arranged approximately in the same radial plane as the rolling bearing.
